# EUROPÄISCHE PATENTSCHRIFT

(11) **EP 1 338 140 B1**
(45) Veröffentlichungstag und Bekanntmachung des Hinweises auf die Patenterteilung: **21.02.2007**
(21) Anmeldenummer: 01993117.9
(22) Anmeldetag: 06.11.2001
(51) Int. Cl.: H04N 1/327

(54) **VERFAHREN ZUM ÜBERTRAGEN VON FAXDATEN ÜBER EIN PAKETÜBERTRAGUNGSNETZ**
METHOD FOR THE TRANSFER OF FAX DATA BY MEANS OF A PACKET TRANSMISSION NETWORK
PROCEDE DE TRANSMISSION DE DONNEES TELECOPIEUR PAR UN RESEAU DE TRANSMISSION PAR PAQUETS

(30) Priorität: 06.11.2000 DE 10054940
(43) Veröffentlichungstag der Anmeldung: 27.08.2003
(73) Patentinhaber: SIEMENS AKTIENGESELLSCHAFT, 80333 München (DE)
(72) Erfinder: HOFFMANN, Klaus, 81735 München (DE)
(86) Internationale Anmeldenummer: PCT/DE2001/004169
(87) Internationale Veröffentlichungsnummer: WO 2002/037834

(56) Entgegenhaltungen:
- EP-A- 1 049 295
- US-A- 6 064 653
- US-A- 6 118 780
- US-A- 6 141 339

## Beschreibung

Die Erfindung betrifft ein Verfahren, bei dem zwischen zwei Faxgeräten eines durchschaltevermittelten Telekommunikationsnetzes ein Übertragungsweg zum Übertragen von Nutzdaten festgelegt wird. Ein zwischen zwei Netzübergangseinheiten liegender Abschnitt des Übertragungsweges ist Teil eines Paketübertragungsnetzes, in welchem die Nutzdaten als Datenpakete weitergeleitet werden. Die Netzübergangseinheiten werden jeweils durch eine Steuereinheit gesteuert.

Das durchschaltevermittelte Telekommunikationsnetz ist beispielsweise ein Netz, in dem die Nutzdaten in Zeitkanälen weitergeleitet werden, z.B. in Zeitkanälen eines PCM-Systems (Pulse Code Modulation). Ein solches Netz ist beispielsweise das Telefonnetz der deutschen Telekom AG.

Das Paketübertragungsnetz ist beispielsweise das Internet oder ein gemäß Internetprotokoll arbeitendes Datenübertragungsnetz. Jedoch werden auch andere Paketübertragungsnetze eingesetzt, z.B. ATM-Netze (Asynchronous Transfer Mode). In einem ATM-Netz werden die Datenpakete auch als Zellen bezeichnet. Die Datenpakete bzw. Zellen enthalten eine Lenkinformation, die für das Weiterleiten der in den Datenpaketen enthaltenen Nutzdaten eingesetzt wird.

Für die Übertragung von Faxdaten hat die ITU-T (International Telecommunication Union - Telecommunication Standardization Sector) die folgenden Standards festgelegt:
- T.30 (07/96) "Procedures for document facsimile transmission in the general switched telephone network", und
- den auf diesen Standard aufbauenden Standard T.38 (06/98) "Procedures for real-time Group 3 facsimile communication over IP networks".

Die Netzübergangseinheiten sind beispielsweise Gateways, wie sie im Standard H.323 der ITU erläutert werden. Zur Steuerung der Netzübergangseinheiten dienen Steuereinheiten. Sind die Steuereinheiten von den Netzübergangseinheiten abgesetzt, d.h. durch größere Entfernungen getrennt, so werden Steuerungsprotokolle eingesetzt. Ein derartiges Steuerungsprotokoll ist beispielsweise das Protokoll MGCP (Media Gateway Control Protocol), das im Defacto-Standard RFC 2705 von der IETF (Internet Engineering Task Force) festgelegt ist. In diesem Standard ist jedoch nicht festgelegt, wie Signalisierungsdaten zwischen den Steuereinheiten für die Netzübergangseinheiten ausgetauscht werden sollen.

Es ist Aufgabe der Erfindung, ein Verfahren zum Übertragen von Faxdaten über ein Paketübertragungsnetz anzugeben, das eine Übertragung von Sprachdaten und Faxdaten mit voneinander verschiedenen Codierungsarten und/oder verschiedenen Übertragungsprotokollen ermöglicht. Insbesondere sollen Sprachdaten mit geringer Übertragungskapazität übertragen werden. Außerdem sollen zugehörige Einheiten und ein zugehöriges Programm angegeben werden.

Die auf das Verfahren bezogene Aufgabe wird durch die im Patentanspruch 1 oder die im Patent anspruch 2 angegebenen Verfahrensschritte gelöst. Weiterbildungen sind in den abhängigen Ansprüchen angegeben.

Beim erfindungsgemäßen Verfahren wird zusätzlich zu den eingangs genannten Verfahrensschritten zunächst für die in den Datenpaketen übertragenen Nutzdaten eine Anfangscodierungsart und ein Anfangsübertragungsprotokoll gewählt. Nach dem Erfassen eines für Faxgeräte typischen Faxtones wird für die in den Datenpaketen übertragenen Nutzdaten eine Faxdatencodierungsart und/oder ein Faxübertragungsprotokoll gewählt. Zum Einstellen der Faxcodierungsart und/oder des Faxübertragungsprotokolls werden Signalisierungsdaten von der einen Netzübergangseinheit, über deren Steuereinheit, über mindestens eine Vermittlungsstelle des durchschaltevermittelten Netzes zu der anderen Netzsteuereinheit und dann zu der anderen Netzübergangseinheit übertragen.

Durch diese Maßnahme wird zum einen erreicht, dass Sprachdaten und Faxdaten gemäß unterschiedlicher Codierungsarten Und/oder unterschiedlicher Übertragungsprotokolle übertragen werden können. Da am Anfang einer Verbindung zwischen den beiden Faxgeräten noch nicht bekannt ist, dass Faxgeräte beteiligt sind, wird vorsorglich die Anfangscodierung und das Anfangsübertragungsprotokoll gewählt. Die Anfangscodierungsart und das Anfangsübertragungsprotokoll sind für die Übertragung von Sprachdaten geeignet. Wird dann der Faxton erkannt, muss auf die Faxdatencodierungsart und/oder das Faxübertragungsprotokoll umgeschaltet werden. Beim Umschalten müssen Signalisierungsdaten zwischen den Netzübergangseinheiten ausgetauscht werden. Weil es kein Protokoll für die Übertragung von Signalisierungsdaten zwischen den Netzübergangseinheiten und auch kein Protokoll zur Übertragung von Signalisierungsdaten zwischen den Steuereinheiten der Netzübergangseinheiten gibt bzw. weil die Umsetzung eines solchen Protokolls zusätzlichen Implementierungsaufwand erfordern würde, wird eine herkömmliche Vermittlungsstelle zur Übertragung der Signalisierungsdaten genutzt. Dies erlaubt es, Signalisierungsdaten zwischen den Netzübergangseinheiten auszutauschen, ohne ein neues Protokoll entwickeln und implementieren zu müssen. Es sind lediglich Anpassungen eines bereits vorhandenen und damit auch praktisch erprobten Protokolls erforderlich.

Es gibt die Möglichkeit, nur die Codierungsart zu ändern, z.B. von G.723.1 auf G.711. Als Faxübertragungsprotokoll auf einer unteren Protokollebene wird sowohl bei Sprachdaten als auch bei Faxdaten dasselbe Protokoll eingesetzt, z.B. das Protokoll RTP. Bei einer zweiten Möglichkeit wird nur das Übertragungsprotokoll geändert, z.B. von RTP auf T.38, TCP oder auf UDP. Die Codierungsart für die Übertragung von Sprachdaten und Faxdaten ist die Codierungsart gemäß Standard G.711. Bei einer dritten Möglichkeit werden die Codierungsart und das Übertragungsprotokoll geändert.

Bei einer Weiterbildung des erfindungsgemäßen Verfahrens bewirkt das Verwenden der Anfangscodierungsart eine Komprimierung oder Dekomprimierung der Nutzdaten beim Übergang zwischen dem Telekommunikationsnetz und dem Paketübertragungsnetz. Durch diese Maßnahme ist es möglich, Sprachdaten zu komprimieren. Die Faxdatencodierungsart bewirkt dagegen keine Komprimierung oder Dekomprimierung bzw. eine andere Komprimierung oder eine andere Dekomprimierung der Nutzdaten als die Anfangscodierungsart. Faxdaten werden in der Regel nicht komprimiert, weil die Signalisierungstöne der Faxgeräte sonst im Partnerfaxgerät nicht sicher erkannt werden. Werden die Faxtöne nicht sicher erkannt, so kommt es zu Fehlern beim Verbindungsaufbau, die bis zu einem Abbruch des Verbindungsaufbaus führen können.

Alternativ oder kumulativ erhält bei der Weiterbildung das Anfangsübertragungsprotokoll Synchronisierungsdaten, die Abtastzeitpunkte eines Sprachsignals markieren. Durch diese Maßnahme wird sichergestellt, dass beim Ausbleiben des Faxtones, d.h. bei der Übertragung von Sprachdaten, trotz der asynchronen Übertragung der Sprachdaten in dem Abschnitt des Paketübertragungsnetzes die Sprachdaten auf der Seite des empfangenden Endgerätes wieder synchronisiert werden können. Es lässt sich eine hohe Sprachqualität erzielen, weil das auszugebende Sprachsignal synchronisiert werden kann. Bereits kleinste Abweichungen bei der Synchronisierung würden nämlich zu einer beträchtlichen Verringerung der Sprachqualität führen. Das Faxübertragungsprotokoll enthält bei einer Ausgestaltung dagegen keine Synchronisierungsdaten, die Abtastzeitpunkte markieren. Bei der Übertragung von Faxdaten ist nur deren Reihenfolge für das entstehende Bild von Bedeutung, nicht jedoch der Zeitpunkt, zu dem diese Daten auf einem Träger ausgedruckt werden. Durch den Verzicht auf Synchronisierungsdaten im Faxübertragungsprotokoll ist dieses Protokoll einfach und benötigt eine geringere Übertragungskapazität.

Bei einer nächsten Weiterbildung ist die Anfangscodierungsart die im Standard G.723.1 "Dual Rate Speach Coder for Multimedia Communications Transmitting at 5,3 and 6,3 Kilobit per Second" von der ITU-T festgelegte Codierungsart. Im Vergleich zu der sonst für die Übertragung von Sprachdaten und Faxdaten verwendeten Codierungsart nach G.711 "Pulse Code Modulation (PCM) of Voice Frequences" festgelegten Codierungsart mit einer Übertragungsrate von 64 Kilobit pro Sekunde sinkt die benötigte Übertragungsrate etwa um den Faktor 10. Alternativ oder kumulativ wird für die Faxdatencodierungsart die im genannten Standard G.711 festgelegte Codierungsart eingesetzt.

Bei einer Ausgestaltung der Weiterbildung ist das Anfangsübertragungsprotokoll das Protokoll RTP (Real Time Protocol), das im Defacto-Standard RFC 1889 bzw. RFC 1890 von der IETF (Internet Engineering Task Force) festgelegt ist. Das Faxübertragungsprotokoll ist bei einer Ausgestaltung das Protokoll UDP (User Datagram Protocol) oder das Protokoll TCP (Transmission Control Protocol), die in den Defacto-Standards RFC768 bzw. RFC793 festgelegt worden sind. Durch den Einsatz der Protokolle UDP bzw. TCP lässt sich der Standard T.38 der ITU-T in Hinsicht auf das Übertragungsprotokoll einer unteren Protokollebene erfüllen. Alternativ oder kumulativ ist das Faxübertragungprotokoll das Protokoll T.38, d.h. alle Protokollebenen genügen dann diesem Standard.

Bei einer nächsten Weiterbildung werden die Signalisierungsdaten zwischen zwei Vermittlungsstellen übertragen. Die Signalisierungsdaten werden zwischen den Vermittlungsstellen mit Transportelementen und einem Transportprotokoll gemäß ISUP-Standard der ITU-T übertragen. Der ISUP-Standard enthält die folgenden Standards:
- Q.761 (12/99) "Signalling System No. 7 - ISDN user part functional description",
- Q.762 ( ) "Signalling System No. 7 - ISDN user part general function of messages and signals",
- Q.763 (1997) "Signalling System No. 7 - ISDN user part formats and codes", und
- Q.764 (09/97) "Signalling System Nr. 7 - ISDN user part signalling procedures".

Die genannten Standards bilden den Kern des ISUP-Protokolls. Durch das Erfüllen dieser Standards lassen sich Vermittlungsstellen einsetzen, die im Vergleich zu marktüblichen Vermittlungsstellen nur leicht oder nicht geändert werden mussten. Alternativ werden die Signalisierungsdaten zwischen den beiden Vermittlungsstellen mit Transportelementen und ein Transportprotokoll gemäß BICC-Standard Q.1901 "Bearer Independent Call Control Protocol" der ITU-T übertragen. Herkömmliche Vermittlungsstellen müssen bei der Verwendung dieses Standards bereits stärker verändert werden, beispielsweise muss der zentrale CIC (Circuit Identification Code) von zwei Byte auf vier Byte verlängert werden. Jedoch ist die Standardisierung des Standards BICC fast abgeschlossen, so dass ein Standard eingesetzt wird, der sich schnell verbreiten wird.

Bei einer nächsten Weiterbildung werden sowohl bei Verwendung des ISUP-Standards als auch bei Verwendung des BICC-Standards Transportelemente gemäß Standard Q.763 Add. 1, z.B. den Container APP (Application Transport Parameter) und Transportprotokolle gemäß Standard Q.765 "Revised Recommendation Q.765 (Application Transport Mechanism)" erfüllt. Insbesondere wird der Standard Q.765.5 "Application Transport Mechanism - Bearer Independent Call Control" eingesetzt. Der zuletzt genannte Standard Q.765.5 wurde zwar für den BICC-Standard festgelegt, lässt sich aber auch bei dem ISUP-Standard einsetzen. Die Transportelemente dienen zum Transport von Signalisierungsdaten, die sich nicht auf die Vermittlung im durchschaltevermittelten Netz beziehen und damit aus Sicht dieses Netzes netzfremd sind. Somit lassen sich die Transportelemente und Transportprotokolle für den Transport der Signalisierungsnachrichten für den im Paketübertragungsnetz liegenden Abschnitt nutzen. Im Standard Q.765.5 wird in diesem Zusammenhang auch von BAT (Bearer Accociated Transport) gesprochen.

Bei einer Weiterbildung wird das im Standard Q. 765.5, Abschnitt 11.1.7 "Single Codec" festgelegte Transportelement eingesetzt. Als Organisationskennzeichen wird ein von der ITU-T abweichendes Kennzeichen genutzt. Dies ist jedenfalls so lange so, bis das erfindungsgemäße Verfahren Teil des Standards geworden ist. Im Transportelement "Codec Information", siehe Standard Q.765.5, Abschnitt 11.1.7.2 und die folgenden Unterabschnitte, wird ein noch nicht in den Standard aufgenommener Wert angegeben, der die Codierungsart gemäß dem Standard für die Übertragung von Faxdaten bezeichnet, insbesondere die Codierungsart T.38.

Bei einer anderen Weiterbildung sind beide Steuereinheiten in einer Vermittlungsstelle angeordnet. Zum Übertragen der Signalisierungsdaten zwischen den Steuereinheiten wird ein für die Vermittlungsstelle festgelegtes Signalisierungsprotokoll eingesetzt. beispielsweise ist bei der Vermittlungsstelle EWSD (elektronisch gesteuertes Wählsystem digital)der Firma Siemens AG das interne Signalisierungsprotokoll sehr stark an den ISUP-Standard angelehnt. Für die meisten Signalisierungsnachrichten des ISUP-Standards gibt es äquivalente Nachrichten im internen Signalisierungsprotokoll. Bei einer Ausgestaltung werden zumindest ein Teil der Nachrichten des internen Signalisierungsprotokolls für die Signalisierung zu voneinander verschiedenen Anschlusseinheiten eingesetzt, die z.B. zum Anschluss von Teilnehmern, anderen Vermittlungsstellen oder der Steuereinheiten dienen. Solche Nachrichten beziehen sich beispielsweise auf den Verbindungsaufbau und den Verbindungsabbau zwischen den genannten Einheiten im Innern der Vermittlungsstelle.

Bei einer Weiterbildung des erfindungsgemäßen Verfahrens ist die Netzübergangseinheit von der sie steuernden Steuereinheit räumlich entfernt. Beispielswiese liegen Netzübergangseinheit und Steuereinheit mehrere hundert Kilometer auseinander. Zur Signalisierung zwischen Netzübergangseinheit und Steuereinheit wird bei einer Ausgestaltung ein standardisiertes Protokoll oder ein defacto-standardisiertes Protokoll eingesetzt. So wird das bereits erwähnte Protokoll MGCP (Media Gateway Control Protocol) gemäß RFC 2705, ein Protokoll gemäß Standard H.248 der ITU-T oder ein anderes geeignetes Protokoll eingesetzt.

Bei einer Ausgestaltung der Weiterbildung sendet die Steuereinheit an die Netzübergangseinheit eine Verbindungsaufbaunachricht, in welcher die Anfangscodierungsart angegeben ist, vorzugsweise die Codierungsart gemäß Standard G.723.1. Außerdem enthält die Verbindungsaufbaunachricht z.B. gemäß RFC 2705 ein Element, das eine Anforderung zum Erfassen und Melden des Faxtones enthält. Durch das Einbeziehen der Anforderung in die Verbindungsaufbaunachricht muss keine separate Nachricht der Anforderung erzeugt werden. Demzufolge wird weniger Übertragungskapazität beim Verbindungsaufbau benötigt.

Bei einer anderen Weiterbildung sendet eine Steuereinheit nach dem Erfassen des Faxtones an die durch sie gesteuerte Netzübergangseinheit eine Verbindungsmodifizierungsnachricht, in der die Faxdatencodierungsart und/oder das Faxdatenübertragungsprotokoll explizit oder implizit angegeben ist, vorzugsweise durch einen Hinweis auf den Standard T.38. Beim Bearbeiten der Verbindungsmodifizierungsnachricht wird dann die Codierungsart und das Übertragungsprotokoll geändert. In der Verbindungsmodifizierungsnachricht lassen sich bereits Verbindungsparameter der Gegenseite übermitteln.

Im folgenden werden Ausführungsbeispiele der Erfindung an Hand der beiliegenden Zeichnungen erläutert. Darin zeigen:
- Figur 1: ein mit dem Internet verbundenes Telefonnetz und in den verbundenen Netzen zum Festlegen von Übertragungswegen ausgetauschte Signalisierungsnachrichten,
- Figur 2: den Aufbau eines Informationselementes zur Übertragung einer IP-Adresse,
- Figur 3: den Aufbau eines Informationselementes zur Übertragung einer RTP- bzw. UDP-Portnummer, und
- Figur 4: den Aufbau eines Codeelementes zur Bezeichnung der Rufinstanz,
- Figur 5: beim Erfassen eines Faxtones ausgetauschte Signalisierungsnachrichten, und
- Figur 6: den Aufbau eines Informationselementes zur Übertragung eines Kennzeichens für die Übertragung von Faxdaten.

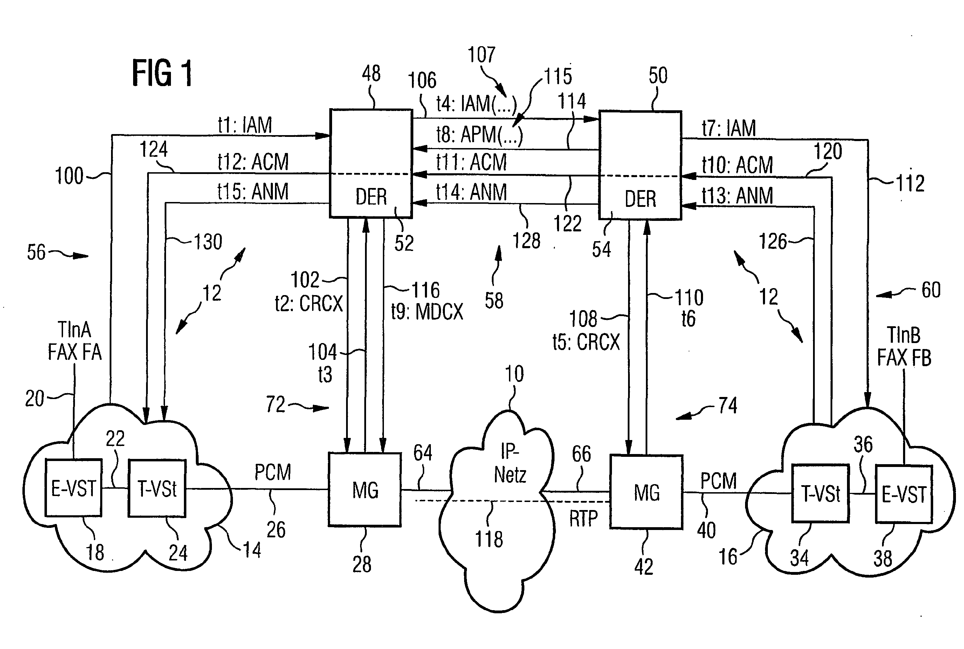

Figur 1 zeigt ein mit dem Internet 10 verbundenes Telefonnetz 12, z.B. das Telefonnetz der deutschen Telekom AG. In Figur 1 sind zwei Teile 14 und 16 des Telefonnetzes 12 dargestellt. Der Teil 14 befindet sich beispielsweise in Süddeutschland und der Teil 16 in Norddeutschland. Im Teil 14 ist eine Endvermittlungsstelle 18 dargestellt, an die über eine Übertragungsleitung 20 ein Faxgerät FA eines Teilnehmers TlnA angeschlossen ist, z.B. über einen ISDN-Anschluss (Integrated Services Digital Network). Die Endvermittlungsstelle 18 ist über eine Zwischenamtsleitung 22 mit einer Transitvermittlungsstelle 24 verbunden. Die Transitvermittlungsstelle 24 ist beispielsweise eine herkömmliche Vermittlungsstelle vom Typ EWSD (elektronisch gesteuertes digitales Wählsystem) der Firma Siemens AG. Eine Übertragungsstrecke 26 führt von der Transitvermittlungsstelle 24 zu einer Netzzugangseinheit 28. Die Übertragungsstrecke 26 ist beispielsweise ein Kanal eines PCM-30-Systems (Puls Code Modulation), wie es sonst zur Übertragung von Sprachdaten zwischen verschiedenen Vermittlungsstellen eingesetzt wird. Das PCM Verfahren verwendet den CODEC G.711. Die Verbindungen zwischen verschiedenen Vermittlungsstellen werden auch als Trunks bezeichnet. Die Funktion der Netzzugangseinheit 28 wird weiter unten erläutert.

Der Teil 16 des Telefonnetzes 12 enthält eine Transitvermittlungsstelle 34, z.B. vom Typ EWSD. Die Transitvermittlungsstelle 34 ist über eine Zwischenamtsleitung 36 mit einer Endvermittlungsstelle 38 verbunden, an die ein Faxgerät FB eines Teilnehmers TlnB angeschlossen ist. Eine Übertragungsstrecke 40 der Transitvermittlungsstelle 34 führt zu einer Netzzugangseinheit 42. Die Übertragungsstrecke 40 ist beispielsweise ein PCM-Kanal, wie er üblicherweise zur Übermittlung von Sprachdaten zwischen Vermittlungsstellen eingesetzt wird. Die Funktion der Netzzugangseinheit 42 wird weiter unten erläutert.

Das Telefonnetz 12 enthält außerdem zwei Vermittlungsstellen 48 und 50, die Weiterentwicklungen der Vermittlungsstellen vom Typ EWSD sind. Zusätzlich zu den Funktionen einer Vermittlungsstelle vom Typ EWSD übernehmen die Vermittlungsstellen 48 und 50 auch die Funktionen von Diensterbringungsrechnern 52 und 54. Diese zusätzlichen Funktionen werden ebenfalls weiter unten an Hand der Figur 1 erläutert. Zwischen der Vermittlungsstelle 58 und der Transitvermittlungsstelle 24 lässt sich eine Signalisierungsverbindung 56 aufbauen, auf der Signalisierungsnachrichten gemäß Protokoll ISUP (ISDN-User Part) übertragen werden. Beispiele für Nachrichten dieses Protokolls werden unten an Hand der Figur 1 erläutert.

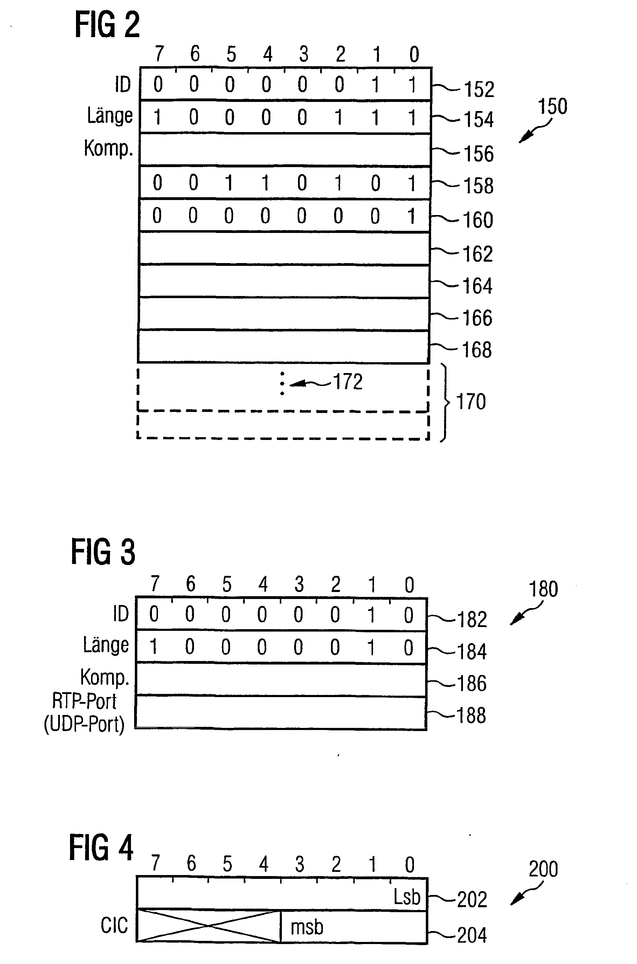

Zwischen den Vermittlungsstellen 48 und 50 lässt sich eine Signalisierungsverbindung 58 aufbauen. Die Signalisierungsnachrichten über diese Signalisierungsverbindung werden ebenfalls gemäß ISUP-Protokoll übertragen. Informationselemente werden in einem Container APP (Application Association Parameter) gemäß Standard Q.765 Add. 1 (06/00) übertragen. Diese Informationselemente werden unten an Hand der Figuren 2 und 3 erläutert.

Zwischen der Vermittlungsstelle 50 und der Transitvermittlungsstelle 34 lässt sich eine Signalisierungsverbindung 60 aufbauen, auf der Signalisierungsnachrichten gemäß Protokoll ISUP übertragen werden.

Für die Übertragung der Sprachdaten zwischen dem Teilnehmer TlnA und dem Teilnehmer TlnB bzw. der Faxdaten zwischen den Faxgeräten FA und FB wird sowohl das Telefonnetz 12 als auch das Internet 10 eingesetzt. Innerhalb des Telefonnetzes 12 werden die Sprachdaten bzw. die Faxdaten in Sprachkanälen durchschaltevermittelt übertragen. Innerhalb des Internets 10 werden die Sprachdaten bzw. die Faxdaten dagegen in Datenpaketen übertragen.

In den Netzzugangseinheiten 28 und 42 werden jeweils in Sprachkanälen empfangene Sprachdaten bzw. Faxdaten auf Datenpakete aufgeteilt und ins Internet 10 weitergeleitet. Aus dem Internet 10 kommende Datenpakete mit Sprachdaten bzw. Faxdaten werden in den Netzzugangseinheiten 28 und 42 entpackt und in Sprachkanälen in das Telefonnetz 12 weitergeleitet. Die Netzzugangseinheit 28 bzw. 42 ist über eine Übertragungsstrecke 64 bzw. 66 an das Internet 10 angeschlossen. Somit können Datenpakete über das Internet 10 zwischen den Netzzugangseinheiten 28 und 42 ausgetauscht werden. Auch die Diensterbringungsrechner 52 und 54 sind mit dem Internet 10 verbunden. Somit lassen sich auch Datenpakete zwischen den Diensterbringungsrechnern 52 bzw. 54 und den Netzzugangseinheiten 28 und 42 austauschen, siehe Signalisierungsweg 72 bzw. 74 zwischen dem Diensterbringungsrechner 52 und der Netzzugangseinheit 28 bzw. zwischen dem Diensterbringungsrechner 54 und der Netzzugangseinheit 42. Die Netzzugangseinheiten 28 und 42 sowie die Diensterbringungsrechner 52 und 54 haben jeweils mindestens eine Internet-Adresse, unter der sie im Internet 10 erreichbar sind.

Im Folgenden werden Signalisierungsnachrichten zum Aufbau einer Verbindung zum Übertragen von Faxdaten bzw. von Sprachdaten zwischen dem Teilnehmer TlnA und dem Teilnehmer TlnB erläutert. Beim Aufbau einer Gesprächsverbindung zwischen dem Teilnehmer TlnA und dem Teilnehmer TlnB bzw. einer Faxverbindung zwischen den Faxgeräten FA und FB erzeugt die Transitvermittlungsstelle 24 zu einem Zeitpunkt t1 protokollgemäß eine Verbindungsaufbaunachricht 100, auch IAM-Nachricht (Initial Address Message) genannt. Diese Nachricht enthält unter anderem die vollständige Rufnummer des Teilnehmers TlnB im Telefonnetz 12 und die Nummer eines für die Übertragung zu nutzenden Zeitschlitzes auf der Übertragungsstrecke 26. Die Verbindungsaufbaunachricht 100 wird über die Signalisierungsverbindung 56 übertragen. Nach dem Empfang der Verbindungsaufbaunachricht 100 wird in der Vermittlungsstelle 48 ein Programm ausgeführt, bei dessen Ausführung festgestellt wird, dass zur Übertragung der Faxdaten bzw. der Sprachdaten das Internet 10 nutzbar ist. Es wird ermittelt, dass als Schnittstelle zwischen Telefonnetz 12 und Internet 10 auf der Seite des Teilnehmers TlnA die Netzzugangseinheit 28 genutzt werden kann. Der Diensterbringungsrechner 52 wird von einer Steuereinheit der Vermittlungsstelle 48 veranlasst, die dazu erforderlichen Schritte auszuführen.

Zu einem nach dem Zeitpunkt t1 liegenden Zeitpunkt t2 sendet der Diensterbringungsrechner 52 an die Netzzugangseinheit 28 über den Signalisierungsweg 72 eine Verbindungsaufbaunachricht 102 gemäß Defacto-Standard RFC 2705. Die Verbindungsaufbaunachricht 102 wird auch als CRCX-Nachricht (Create Connection) bezeichnet. In der Verbindungsaufbaunachricht 102 ist der Zeitschlitz angegeben, der für die Nutzdatenübertragung genutzt werden soll. Außerdem ist als CODEC (Codierung/Decodierung) z.B. das Verfahren gemäß Standard G.723.1 angegeben. Die Netzzugangseinheit 28 bearbeitet die Verbindungsaufbaunachricht 102 und erzeugt als Antwort zu einem Zeitpunkt t3 eine Antwortnachricht 104. Die Antwortnachricht 104 bestätigt zum einen den Empfang der Verbindungsaufbaunachricht 102 und enthält u.a. eine Internetadresse und eine Portnummer, die für den Empfang von Nutzdaten für eine zwischen der Netzzugangseinheit 28 und der Netzzugangseinheit 42 aufzubauende RTP-Verbindung nutzbar ist und die nun dem Zeitschlitz zugeordnet ist. Die RTP-Verbindung ist zum Übertragen von Sprachdaten geeignet und wird vorsorglich aufgebaut, da zum Zeitpunkt des Verbindungsaufbaus noch nicht festgestellt werden kann, ob Faxdaten oder ob Sprachdaten übertragen werden sollen.

Der Diensterbringungsrechner 52 empfängt die Antwortnachricht 104 und leitet die empfangene Internetadresse sowie die Portnummer an die Steuereinheit der Vermittlungsstelle 48 weiter. Die Steuereinheit der Vermittlungsstelle 48 bearbeitet die Verbindungsaufbaunachricht 100 gemäß ISUP-Protokoll und erzeugt zu einem Zeitpunkt t4 eine Verbindungsaufbaunachricht 106. Die Verbindungsaufbaunachricht 106 wird gemäß ISUP-Protokoll auch als IAM-Nachricht (Initial Address Massage) bezeichnet. In der Verbindungsaufbaunachricht 106 sind zwei unten an Hand der Figuren 2 und 3 näher erläuterte Informationselemente enthalten, in denen die Internetadresse und die Portnummer weitergeleitet werden, siehe Punkte 107. Diese Informationselemente sind nicht im ISUP-Standard festgelegt, werden jedoch unter Einhaltung des Standards ISUP über die Signalisierungsverbindung 58 übertragen.

Die Vermittlungsstelle 50 empfängt die Verbindungsaufbaunachricht 106 und bearbeitet auch die darin enthaltenen Informationselemente. Aufgrund des Inhalts dieser Informationselemente oder an Hand des Codes (CIC - Circuit Identifikation Code) zur Bezeichnung der Rufinstanz wird erkannt, dass keine übliche Telefonverbindung, sondern eine Telefonverbindung unter Verwendung des Internets 10 aufgebaut werden soll. Als zu nutzende Netzzugangseinheit auf der Seite des Teilnehmers TlnB wird durch die Vermittlungsstelle 50 die Netzzugangseinheit 42 ermittelt. Außerdem bestimmt die Vermittlungsstelle 50 einen Zeitschlitz, der bei ausschließlich durchschaltevermittelter Übertragung der Nutzdaten zwischen den Vermittlungsstellen 50 und 34 zu nutzen wäre. Dieser Zeitschlitz bezeichnet einen Übertragungskanal der Übertragungsstrecke 40.

Der Diensterbringungsrechner 54 wird durch die Steuereinheit der Vermittlungsstelle 50 veranlasst, eine Internetverbindung über den Signalisierungsweg 74 aufzubauen. Zu einem Zeitpunkt t5 sendet der Diensterbringungsrechner 54 eine Verbindungsaufbaunachricht 108 an die Netzzugangseinheit 42. Die Verbindungsaufbaunachricht 108 entspricht dem bereits erwähnten Defacto-Standard RFC 2705 und wird auch als CRCX-Nachricht (Create Connection) bezeichnet. In der Nachricht 108 sind die von der Netzzugangseinheit 28 über die Vermittlungsstelle 48 gesendete Internetadresse und die Portnummer enthalten, die für aufzubauende Verbindung zu nutzen sind, welche vorsorglich eine RTP-Verbindung ist, weil meistens Sprachdaten übertragen werden. Außerdem ist in der Verbindungsaufbaunachricht 108 der von der Vermittlungsstelle 50 ermittelte Zeitschlitz sowie der CODEC G.723.1 angegeben. Die Verbindungsaufbaunachricht 108 enthält auch ein Datenfeld, in welchem die Erkennung eines Faxtones der Frequenz von 2100 Hz in der Netzübergangseinheit 42 angefordert wird, siehe RFC 2705, abschnitt 3.4, "Formal description of the protocol", RequestedEvents, requestedEvent, eventName, packageName, und Abschnitt 6.1.1, "Generic Media Package", Parameter ft "fax tone" in Verbindung mit dem Parameter R "Request". Alternativ lässt sich die Anforderung auch mit einer separaten Benachrichtigungsanforderungs-Nachricht stellen (notification request).

Bei der Bearbeitung der Verbindungsaufbaunachricht 108 in der Netzzugangseinheit 42 wird zu dem angegebenen Zeitschlitz eine Internetadresse und eine noch nicht belegte Portnummer der Netzzugangseinheit 42 ermittelt, die für den Empfang der Nutzdatenpakete von der Netzzugangseinheit 28 nutzbar sind. Die Netzzugangseinheit 42 sendet anschließend zu einem Zeitpunkt t6 eine Antwortnachricht 110, um den Empfang der Verbindungsaufbaunachricht 108 zu bestätigen. Die Antwortnachricht 110 enthält außerdem die ermittelte Internetadresse der Netzzugangseinheit 42 sowie die ermittelte Portnummer.

Der übrige Teil der Verbindungsaufbaunachricht 106 wird in der Vermittlungsstelle 50 gemäß Protokoll ISUP bearbeitet. Dabei wird eine Verbindungsaufbaunachricht 112 erzeugt, die über die Signalisierungsverbindung 60 an die Transitvermittlungsstelle 34 übertragen wird. Die Verbindungsaufbaunachricht 112 wird auch als IAM-Nachricht (Initial Address Message) bezeichnet. Die Verbindungsaufbaunachricht 112 enthält unter anderem die Rufnummer des Teilnehmers TlnB und den von der Vermittlungsstelle 50 vorgegebenen Zeitschlitz. In der Transitvermittlungsstelle 34 wird die Verbindungsaufbaunachricht 112 protokollgemäß bearbeitet und an die Endvermittlungsstelle 38 weitergeleitet. Die Endvermittlungsstelle 38 ruft den Teilnehmer TlnB bzw. das Faxgerät FB.

In der Vermittlungsstelle 50 wird beim Bearbeiten der Verbindungsaufbaunachricht 106 nach dem Empfang der Antwortnachricht 110 eine Antwortnachricht 114 erzeugt, die gemäß Protokoll ISUP auch als APM-Nachricht (Application Transport Message) bezeichnet wird. Die Antwortnachricht 114 enthält ein Informationselement mit der Internetadresse der Netzzugangseinheit 42 und ein Informationselement mit der von der Netzzugangseinheit 42 übermittelten RTP-Portnummer, siehe Punkte 115. Die Antwortnachricht 114 wird zu einem Zeitpunkt t8 an die Vermittlungsstelle 48 übertragen.

Die Steuereinheit der Vermittlungsstelle 48 extrahiert aus der Antwortnachricht 114 die Internetadresse und die Portnummer und veranlasst, dass der Diensterbringungsrechner 52 diese Verbindungsparameter an die Netzzugangseinheit 28 weitergibt. Dazu sendet der Diensterbringungsrechner 52 zu einem Zeitpunkt t9 eine Änderungsnachricht 116 gemäß Defacto-Standard RFC 2705. Die Änderungsnachricht 116 wird auch als MDCX-Nachricht (Modify Connection) bezeichnet. Die Änderungsnachricht 116 enthält die Internetadresse der Netzzugangseinheit 42 und die für die vorsorglich aufzubauende RTP-Verbindung zu nutzende Portnummer der Netzzugangseinheit 42.

In der Netzzugangseinheit 28 wird die Änderungsnachricht 116 verarbeitet, so dass ein direkter Übertragungsweg 118 zum Übertragen von Nutzdaten gemäß Protokoll RTP und CODEC G.723.1 zwischen den Netzzugangseinheiten 28 und 42 nutzbar ist. Eine von der Netzzugangseinheit 28 erzeugte Antwortnachricht auf die Änderungsnachricht 116 ist in Figur 1 nicht dargestellt.

Zu einem folgenden Zeitpunkt t10 erzeugt die Transitvermittlungsstelle 34 protokollgemäß eine Nachricht 120, die auch als ACM-Nachricht (Address Complete Message) bezeichnet wird und signalisiert, dass alle Wahlziffern übertragen worden sind, um die Teilnehmer TlnA und TlnB bzw. die Faxgeräte FA und FB zu verbinden. Die Nachricht 120 wird von der Steuereinheit der Vermittlungsstelle 50 protokollgemäß bearbeitet. Zu einem Zeitpunkt t11 sendet die Vermittlungsstelle 50 gemäß Protokoll ISUP eine ACM-Nachricht 122 an die Vermittlungsstelle 48. Die Vermittlungsstelle 48 verarbeitet die ACM-Nachricht 122 und sendet ihrerseits eine ACM-Nachricht 124 an die Transitvermittlungsstelle 24.

Meldet sich das Faxgerät FB des Teilnehmers TlnB, so wird dies gemäß Protokoll ISUP an die Transitvermittlungsstelle 34 signalisiert. Die Transitvermittlungsstelle 34 erzeugt zu einem Zeitpunkt t13 eine Antwortnachricht 126, die über die Signalisierungsverbindung 60 zur Vermittlungsstelle 50 übertragen wird. Die Antwortnachricht 126 wird auch als ANM-Nachricht (Answer Message) bezeichnet. Aufgrund dieser Nachricht beginnt die Gebührenpflicht.

In der Vermittlungsstelle 50 wird die Antwortnachricht 126 protokollgemäß bearbeitet. Dabei wird an die Vermittlungsstelle 48 eine Antwortnachricht 128 gesendet. Die Vermittlungsstelle 48 erzeugt aufgrund der Antwortnachricht 128 zu einem Zeitpunkt t15 eine Antwortnachricht 130 an die Transitvermittlungsstelle 24.

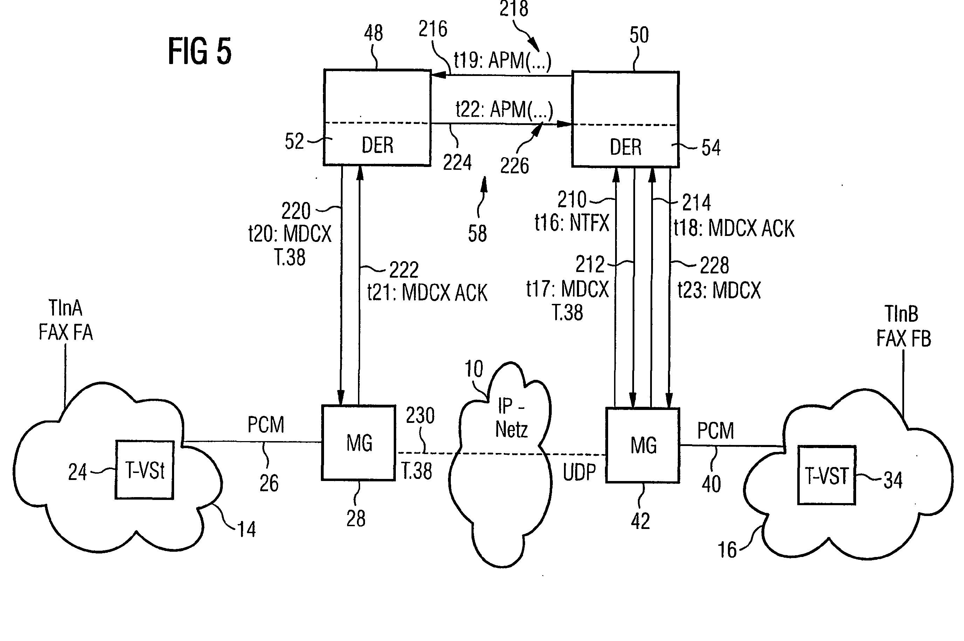

Die vom Faxgerät FB des Teilnehmers TlnB erzeugten Inband-Signalisierungsdaten werden im Teil 16 des Telefonnetzes 12 und über die Übertragungsstrecke 40 in Zeitschlitzen und gemäß CODEC G.711 übertragen. Vorgänge nach dem Erfassen des vom Faxgerät FB gesendeten Faxtones werden unten anhand der Figur 5 erläutert.

Figur 2 zeigt den Aufbau eines Informationselementes 150 zur Übertragung einer Internetadresse. Das Informationselement 150 enthält bei einem ersten Ausführungsbeispiel neun aufeinanderfolgende Datenfelder 152 bis 168, die jeweils eine Länge von acht Bit haben, d.h. von einem Byte. Bitpositionen 0 bis 7 liegen in dieser Reihenfolge von rechts nach links. Im Datenfeld 152 wird ein Kennzeichen (Interworking Function Address) zur Kennzeichnung des Informationselementes 150 übertragen. Das Kennzeichen hat den Wert 3, um anzuzeigen, dass das Informationselement 150 zur Übertragung einer Internetadresse dient.

In einem Datenfeld 154 wird die Länge des Informationselementes 150 abzüglich der Datenfelder 152 und 154 angegeben. Im Ausführungsbeispiel ist im Datenfeld 154 der Wert Sieben binär gespeichert, siehe auch Standard Q.765.5, Abschnitt 11.1.1.

In dem Datenfeld 156 wird eine Kompatibilitätsinformation übertragen, deren Wert dem Empfänger anzeigt, was zu tun ist, wenn er das Informationselement 150 nicht vollständig bearbeiten kann, siehe auch Standard Q.765.5, Abschnitt 11.1.1.

Im Datenfeld 158 wird ein Berechtigungs- und Formatkennzeichen übertragen, das in hexadezimaler Schreibweise den Wert "35" hat. Dieser Wert wird gemäß Standard X.213 Anhang A der ITU als Hinweis auf das Internetprotokoll verwendet.

Im Datenfeld 160 ist ein Kennzeichen mit dem Wert Eins gespeichert, wenn eine Internetadresse gemäß Internetprotokollversion 4 übertragen wird. In den sich anschließenden Datenfeldern 162 bis 168 werden dann die vier Byte er der Internetadresse gemäß Version 4 des Internetprotokolls übertragen.

Soll dagegen mit Hilfe des Informationselementes 150 eine Internetadresse gemäß Internetprotokoll Version 6 übertragen werden, so gibt es eine Abweichung in der Längenangabe, siehe Datenfeld 154 und eine Abweichung im Datenfeld 160. Im Datenfeld 160 wird bei der Übertragung von Internetadressen gemäß Internetprotokoll Version 6 der Wert Null übertragen. In diesem Fall schließen sich an das Datenfeld 160 sechzehn Datenfelder 162 bis 170 an, in denen die 16 Byte der Internetadresse gemäß Internetprotokoll Version 6 gespeichert sind, siehe auch Punkte 172.

Figur 3 zeigt den Aufbau eines Informationselementes 180 zur Übertragung einer RTP-, UDP- oder TCP-Portnummer. Das Informationselement 180 enthält vier Datenfelder 182 bis 188 von jeweils einem Byte Länge. Die Bedeutung der Datenfelder 182 bis 186 entspricht in dieser Reihenfolge der Bedeutung der Datenfelder 152 bis 156 des Informationselementes 150. Im Datenfeld 182 wird der Wert Zwei übertragen, um das Informationselement 180 als Informationselement zur Übertragung einer Portnummer zu kennzeichnen. Das im Datenfeld 182 übertragene Kennzeichnen wird abweichend von der hier erbrachten Funktion im Standard Q.765.5, Abschnitt 11.1.4, als "backbone network connection identifier" bezeichnet. In einem Datenfeld 184 wird der Wert Zwei als Länge des Informationselementes 180 abzüglich der Datenfelder 182 und 184 übertragen. Im Datenfeld 186 wird eine Information zur Kompatibilität übertragen. Im Datenfeld 188 wird dann die zu übertragende Portnummer übertragen, z.B. die in der Netzzugangseinheit 28 bzw. in der Netzzugangseinheit 42 für die RTP-Verbindung zu nutzende Portnummer, siehe Figur 1.

Figur 4 zeigt den Aufbau eines Codeelementes 200, das zur Bezeichnung von Rufinstanzen zwischen den Vermittlungsstellen 48 und'50 eingesetzt wird. Der Aufbau des Codeelementes 200 ist im Standard Q.763, Abschnitt 1.2, festgelegt. Das Codeelement 200 enthält zwei Datenfelder 202 und 204 mit jeweils einer Länge von einem Byte. Die Nummer der Instanz wird beginnend mit dem niederwertigsten Bit im Datenfeld 202, siehe Bitposition 0, bis zur Bitposition 7 des Datenfeldes 202 und dann weiter zwischen den Bitpositionen 0 bis 3 des Datenfeldes 204 übertragen. Die Bitpositionen 4 bis 7 des Datenfeldes 204 werden nicht zur Bezeichnung der Instanz genutzt. Das Codeelement 200 hat keine weiteren Datenfelder.

Figur 5 zeigt beim Erfassen des vom Faxgerät FB ausgesendeten Faxtones ausgetauschte Signalisierungsnachrichten. Nach dem Erfassen des Faxtones sendet die Netzzugangseinheit 42 zu einem Zeitpunkt t16 eine Benachrichtigungsnachricht 210 an die Vermittlungsstelle 50. Gemäß Protokoll MGCP wird die Benachrichtigungsnachricht 210 als NTFX-Nachricht (Notification) bezeichnet. Die Benachrichtigungsnachricht 210 wird zunächst im Diensterbringungsrechner 54 bearbeitet.

Der Diensterbringungsrechner 54 sendet auf die Benachrichtigungsnachricht 210 hin zu einem Zeitpunkt t17 an die Netzzugangseinheit 42 eine Verbindungsänderungsnachricht 212, auch MDCX-Nachricht genannt, in welcher als Übertragungsprotokoll für die geänderte Verbindung ein Kennzeichen angegeben ist, das auf den Standard T.38 hinweist. Das Kennzeichen wird beispielsweise in einem CODEC bzw. "compressionAlgorithm" bezeichneten Feld angegeben, siehe RFC 2705, Abschnitt 3.4, "Formal syntax description of the protocol", "LocalConnectionsOptions". Beispielsweise wird in Anlehnung an die art der Zeichenfolge "PCM A" für G.711 gemäß den Standards RFC 1889 und RFC 1890 die Zeichenfolge "T38" angegeben.

Für die aufzubauende UDP-Verbindung wird in der Netzzugangseinheit 42 aufgrund des auf den Standard T.38 hinweisenden Kennzeichens in der Verbindungsänderungsnachricht 212 ein gemäß Standard T.38 zulässiger Codec gewählt, z.B. der Codec G.711.

Die Netzzugangseinheit 42 ermittelt aufgrund des Hinweises nach dem Empfang der Verbindungsänderungsnachricht 212 eine Internetadresse und eine Portnummer für eine UDP-Verbindung (User Datagram Protocol). Die Internetadresse und die Portnummer werden in einer Antwortnachricht 214, auch MDCX-ACK-Nachricht genannt, zu einem Zeitpunkt t18 an den Diensterbringungsrechner 54 gesendet. In der Antwortnachricht 214 wird ein Kennzeichen mit dem Wert "90" zur Angabe des CODEC's bzw. zur Kennzeichnung des Kompressionsalgorithmus genutzt, der gemäß Defacto-Standard RFC 1890 zur freien Auswahl steht.

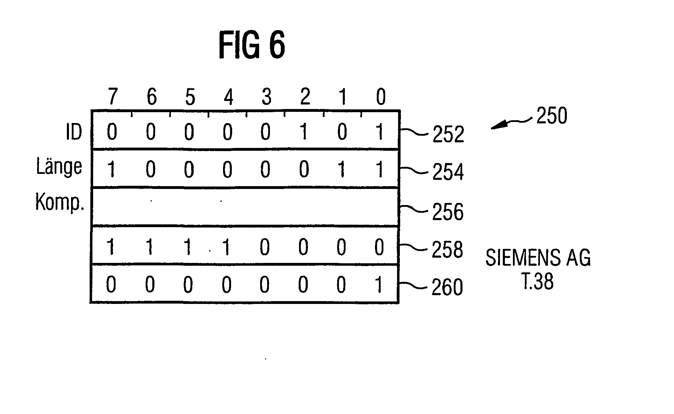

Der Diensterbringungsrechner 54 leitet die in der Antwortnachricht 214 enthaltene Internetadresse und die Portadresse über ein internes Signalisierungsprotokoll der Vermittlungsstelle 50 an eine Anschlusseinheit zum Anschluss der Signalisierungsverbindung 58 weiter. Diese Anschlusseinheit erzeugt eine APM-Nachricht 216, die zu einem Zeitpunkt t19 über die Signalisierungsverbindung 58 an die Vermittlungsstelle 48 gesendet wird. In der APM-Nachricht 216 sind Transportelemente 218 enthalten, die den gleichen Aufbau wie die Informationselemente 150 und 180 haben. In den Transportelementen wird die von der Netzzugangseinheit 42 für die UDP-Verbindung übermittelte Internetadresse und die UDP-Portnummer übertragen. Außerdem enthält die Nachricht 216 ein Informationselement "Action Indicator", wie es im Standard Q.765.5, Abschnitt 11.1.3 angegeben ist. In diesem Transportelement wird der Wert "00001011" (Modify Codec) übertragen. Außerdem ist in der Nachricht 216 ein Transportelement 250 enthalten, das unten an Hand der Figur 6 erläutert wird. Mit Hilfe des Transportelementes 250 wird die Umschaltung auf die Übertragungsprotokollart gemäß Standard T.38 angefordert, d.h. insbesondere das Übertragungsprotokoll UDP und auf die gemäß Standard T.38 zulässige Codierungs-/Decodierungsart, z.B. gemäß G.711.

Die Vermittlungsstelle 28 empfängt die Nachricht 216 und leitet die darin enthaltenen Signalisierungsdaten mit Hilfe von internen Signalisierungsnachrichten an den Diensterbringungsrechner 52 weiter.

Zu einem Zeitpunkt t20 sendet der Diensterbringungsrechner 52 eine Verbindungsänderungsnachricht 220, auch MDCX-Nachricht genannt, an die Netzzugangseinheit 28. Die Verbindungsänderungsnachricht 220 enthält die für die aufzubauende UDP-Verbindung zu nutzende Internetadresse und Portnummer. Außerdem ist in der Verbindungsänderungsnachricht 220 als CODEC bzw. als Kennzeichen für den Kompressionsalgorithmus ein Kennzeichen angegeben, das auf den Standard T.38 hinweist.

Beim Bearbeiten der Verbindungsänderungsnachricht 220 in der Netzzugangseinheit 28 wird eine für die Verbindung zu nutzende Internetadresse und eine Portadresse festgelegt. Die Umschaltung auf ein gemäß Standard T.38 zulässige Codierungsart, z.B. auf G.711, und auf das Übertragungsprotokoll UDP wird aufgrund des Hinweises auf den Standard T.38 vorgenommen. Die Internetadresse der Netzzugangseinheit 28 und die ermittelte Portnummer werden in einer Antwortnachricht 222 zu einem Zeitpunkt t21 von der Netzzugangseinheit 28 zum Diensterbringungsrechner 52 übermittelt. Die Antwortnachricht 222 enthält als CODEC bzw. als Kennzeichen für den Kompressionsalgorithmus ein proprietäres Kennzeichen, das auf den Standard T.38 hinweist. Das Kennzeichen hat z.B. den Wert "90", der gemäß Defacto-Standard RFC 1890 zur freien Auswahl steht.

Der Diensterbringungsrechner 52 leitet die in der Antwortnachricht 222 enthaltene Internetadresse und Portnummer an die Vermittlungsstelle 48 weiter, die zu einem Zeitpunkt t22 eine APM-Nachricht 224 an die Vermittlungsstelle 50 sendet. Die Nachricht 224 enthält Transportelemente, die den Informationselementen 150 und 180 strukturell gleich sind, jedoch die in der Netzzugangseinheit 28 ermittelte Internetadresse und UDP-Portnummer enthalten. Außerdem wird mit Hilfe eines Transportelementes "Action Indicator" gemäß Standard Q.765.5, Abschnitt 11.1.3, und mit Hilfe des dort festgelegten Wertes "00001100" signalisiert, dass die Umschaltung des CODEC erfolgreich durchgeführt werden konnte. Die Vermittlungsstelle 50 leitet die in der Nachricht 224 enthaltene Internetadresse und Portnummer an den Diensterbringungsrechner 54 weiter. Der Diensterbringungsrechner 54 erzeugt zu einem Zeitpunkt t23 eine Verbindungsänderungsnachricht 228, auch MDCX-Nachricht genannt, in der die kurz zuvor übermittelte Internetadresse und UDP-Portnummer enthalten sind. Damit sind in der Netzzugangseinheit 42 die für die UDP-Verbindung zu nutzenden Daten bekannt. Der für die Verbindung der Faxgeräte FB und FA genutzte Zeitschlitz auf der Übertragungsstrecke 40 wird nun der UDP-Verbindung zugeordnet. Ebenso wird in der Netzzugangseinheit 28 der für die Verbindung zwischen den Faxgeräten FB und FA genutzte Zeitschlitz der neuen UDP-Verbindung zugeordnet. Damit wird der vom Faxgerät FB kommende Faxton über die Übertragungsstrecke 40, die UDP-Verbindung 230 und die Übertragungsstrecke 26 zum Faxgerät FA übertragen. Die Übertragung der Faxdaten im Internet 10 erfolgt gemäß Standard T.38, d.h. insbesondere mit dem in diesem Standard festgelegten Fehlerkorrekturverfahren. Somit arbeiten die Netzzugangseinheiten 28 und 42 gemäß Standard T.38.

Figur 6 zeigt ein Informationselement 250, das zu den Transportelementen 218 gehört. Das Informationselement 250 dient zur Signalisierung eines neuen CODEC's und ist gemäß einer leichten Modifizierung des Standards Q.765.5 aufgebaut. Das Informationselement 250 enthält fünf Datenfelder 252 bis 260 zur Übertragung jeweils eines Bytes. Die ersten drei Datenfelder 252, 254 und 256 haben die gleiche Funktion wie die ersten drei Datenfelder in den Informationselementen 150 und 180. Im Datenfeld 252 ist als Kennzeichen der Wert "00000101" angegeben, dem das Informationselement "Single Codec" zugeordnet ist, siehe Standard Q.765.5, Abschnitt 11.1.2.

Das Datenfeld 254 enthält den Wert "10000011", um anzugeben, dass dem Datenfeld 254 drei weitere Datenfelder folgen. Das Datenfeld 256 dient zur Übertragung der Kompatibilitätsinformation, wie im Standard Q.765.5, Abschnitt 11.1.1, insbesondere Figur 9, festgelegt.

Im Datenfeld 258 ist als Organisations-Kennzeichen der Wert "11110000" angegeben, um auf die Siemens AG hinzuweisen. Im Standard Q.765.5 ist im Abschnitt 11.1.7.1 bisher dieser Wert noch nicht verwendet. Demzufolge müsste der Wert "11110000" bzw. ein anderer auf die Siemens AG hinweisender Wert oder auf eine andere Firma hinweisender Wert in den Standard Q.765.5, Abschnitt 11.1.7.1 übernommen werden. So lange dies nicht erfolgt ist, ist die Belegung des Datenfeldes 258 proprietär.

Im Datenfeld 260 ist der Wert "00000001" angegeben, um auf den Standard T.38 hinzuweisen. Auch bezüglich dieses Wertes ließe sich der Standard Q.765.5 erweitern. Es müsste für die Organisation Siemens AG ein Abschnitt 11.1.7.2.2 eingefügt werden, in welchem dem Wert "00000001" der Standard T.38 zugewiesen wird.

Bei einem anderen Ausführungsbeispiel wird an Stelle des Internetzes 10 ein ATM-Netz (Asynchronious Transfer Mode) verwendet. Die Signalisierung wird gemäß BICC-Standard ausgeführt. An Stelle des Informationselementes 200 wird dann ein aus vier Bytes bestehendes Informationselement verwendet. Die an Hand der Figur 5 erläuterten Signalisierungsvorgänge bleiben jedoch im wesentlichen gleich.

Es wird auch an Stelle des ISUP-Standards der BICC Standard zur Signalisierung für die Übertragung von Sprachdaten bzw. Faxdaten in einem IP-Netz (Internet Protocol) beachtet. Die anderen Vorgänge laufen so ab, wie oben an Hand der Figuren 1 bis 5 erläutert.

Vor der Übertragung der Faxdaten werden selbstverständlich eine gegebenenfalls aktivierte Sprachpausenunterdrückung, eine Echounterdrückung und/oder eine Datenkompression mit Hilfe von Steuerungsnachrichten gemäß Protokoll MGCP ausgeschaltet.

Somit wird die Übertragung der Faxdaten durch die genannten Funktionen nicht beeinträchtigt.

## Patentansprüche

1. Verfahren zum Übertragen von Faxdaten über ein Paketübertragungsnetz (10),
bei dem zwischen zwei Faxgeräten (FA, FB) eines durchschaltevermittelten Telekommunikationsnetzes (12) ein Übertragungsweg zum Übertragen von Nutzdaten festgelegt wird, ein zwischen zwei Netzübergangseinheiten (28, 42) liegender Abschnitt (118, 230) des Übertragungsweges in einem Paketübertragungsnetz (10) liegt, in welchem die Nutzdaten als Datenpakete weitergeleitet werden,
die Netzübergangseinheiten (28, 42) jeweils durch eine Steuereinheit (52, 54) gesteuert werden,
zunächst für die in den Datenpaketen zu übertragenden Nutzdaten eine Anfangscodierungsart und ein Anfangsübertragungsprotokoll gewählt wird, die für die Übertragung von Sprachdaten geeignet sind,
nach dem Erfassen eines für Faxgeräte (FA, FB) typischen Faxtones für die in den Datenpaketen zu übertragenden Nutzdaten eine Faxdatencodierungsart gewählt wird,
und bei dem zum Einstellen der Faxdatencodierungsart Signalisierungsdaten von einer Netzübergangseinheit (28, 42), über deren Steuereinheit (52, 54), über mindestens eine Vermittlungsstelle (48, 50) des durchschaltevermittelten Netzes (12) zu der anderen Steuereinheit (52, 54) und dann zu der anderen Netzübergangseinheit (28, 42) gelangen.

2. Verfahren zum Übertragen von Faxdaten über ein Paketübertragungsnetz (10),
bei dem zwischen zwei Faxgeräten (FA, FB) eines durchschaltevermittelten Telekommunikationsnetzes (12) ein Übertragungsweg zum Übertragen von Nutzdaten festgelegt wird, ein zwischen zwei Netzübergangseinheiten (28, 42) liegender Abschnitt (118, 230) des Übertragungsweges in einem Paketübertragungsnetz (10) liegt, in welchem die Nutzdaten als Datenpakete weitergeleitet werden,
die Netzübergangseinheiten (28, 42) jeweils durch eine Steuereinheit (52, 54) gesteuert werden,
zunächst für die in den Datenpaketen zu übertragenden Nutzdaten eine Anfangscodierungsart und ein Anfangsübertragungsprotokoll gewählt wird, die für die Übertragung von Sprachdaten geeignet sind,
nach dem Erfassen eines für Faxgeräte (FA, FB) typischen Faxtones für die in den Datenpaketen zu übertragenden Nutzdaten ein Faxübertragungsprotokoll gewählt wird,
und bei dem zum Einstellen des Faxübertragungsprotokolls Signalisierungsdaten von einer Netzübergangseinheit (28, 42), über deren Steuereinheit (52, 54), über mindestens eine Vermittlungsstelle (48, 50) des durchschaltevermittelten Netzes (12) zu der anderen Steuereinheit (52, 54) und dann zu der anderen Netzübergangseinheit (28, 42) gelangen.

3. Verfahren nach Ansprüche 1-2, **dadurch**
**gekennzeichnet, dass** die Anfangscodierungsart eine Komprimierung oder Dekomprimierung der Nutzdaten beim Übergang zwischen den Netzen (10, 12) bewirkt,

4. Verfahren nach Anspruch 1, **dadurch**
**gekennzeichnet, dass** die Faxdatencodierungsart keine Komprimierung oder Dekomprimierung oder eine andere Komprimierung oder Dekomprimierung der Nutzdaten als die Anfangscodierungsart bewirkt.

5. Verfahren nach Ansprüche 1-2, **dadurch gekennzeichnet, dass** das Anfangsübertragungsprotokoll Synchronisierungsdaten enthält, die Abtastzeitpunkte eines Sprachsignals markieren.

6. Verfahren nach Anspruch 2, **dadurch**
**gekennzeichnet, dass** das Faxübertragungsprotokoll keine Synchronisierungsdaten enthält, die Abtastzeitpunkte markieren.

7. Verfahren nach Anspruch 3-6, **dadurch**
**gekennzeichnet, dass** die Anfangscodierungsart die im Standard G.723.1 oder die in einem auf diesem Standard aufbauenden Standard festgelegte Codierungsart ist,

8. Verfahren nach Anspruch 4, oder nach Anspruch 3 oder 5 wenn abhängig von Anspruch 1, **dadurch gekennzeichnet, dass** die Faxdatencodierungsart ein Codierungsart gemäß Standard T.38, vorzugsweise die im Standard G.711 festgelegte Codierungsart, oder die in einem auf einem dieser Standards aufbauenden Standard festgelegte Codierungsart ist.

9. Verfahren nach Ansprüche 3-6, **dadurch gekennzeichnet, dass** das Anfangsübertragungsprotokoll das Protokoll RTP oder ein auf diesem Protokoll aufbauendes Protokoll ist.

10. Verfahren nach Anspruch 6, oder nach Anspruch 3 oder 5, wenn abhängig von Anspruch 2, **dadurch gekennzeichnet, dass** das Faxübertragungsprotokoll das Protokoll UDP, das Protokoll TCP oder das Protokoll gemäß Standard T.38 oder gemäß einem auf einem dieser Standards aufbauenden Standard ist.

11. Verfahren nach einem der vorhergehenden Ansprüche, **dadurch gekennzeichnet, dass** die Signalisierungsdaten zwischen zwei Vermittlungsstellen (48, 50) übertragen werden,
dass die Signalisierungsdaten entweder zwischen den Vermittlungsstellen (48, 50) mit Transportelementen (150, 180, 250) und einem Transportprotokoll gemäß ISUP-Standard, insbesondere gemäß Standard Q.761 bis Q.764 oder gemäß einem auf einem dieser Standards aufbauenden Standard übertragen werden,
oder dass die Signalisierungsdaten zwischen den Vermittlungsstellen (48, 50) mit Transportelementen und einem Transportprotokoll gemäß BICC-Standard oder einem auf diesem Standard aufbauenden Standard übertragen werden.

12. Verfahren nach Anspruch 11, **dadurch**
**gekennzeichnet, dass** die Transportelemente (150, 180, 250) und das Transportprotokoll den Standard Q.763 Add. 1 oder einen auf einem dieser Standards aufbauenden Standard erfüllen, insbesondere den Standard Q.765.5 bzw. einen auf diesen Standard aufbauenden Standard.

13. Verfahren nach Anspruch 11, **dadurch**
**gekennzeichnet, dass** die Transportelemente (150, 180, 250) und das Transportprotokoll den Standard Q.765 oder einen auf einem dieser Standards aufbauenden Standard erfüllen, insbesondere den Standard Q.765.5 bzw. einen auf diesen Standard aufbauenden Standard.

14. Verfahren nach Ansprüche 12-13, **dadurch**
**gekennzeichnet, dass** als Transportelement (250) das Transportelement "Single Codec" eingesetzt wird,
dass vorzugsweise als Organisationskennzeichen (258) ein von der ITU-T abweichendes Kennzeichen genutzt wird,
und dass im Transportelement (260) "Codec Information" ein Wert angegeben ist, der einen Standard für die Übertragung von Faxdaten gemäß einem Standard für die Übertragung von Faxdaten bezeichnet, wobei der Standard für die Übertragung der Faxdaten vorzugsweise der Standard T.38 oder ein auf diesem Standard aufbauender Standard ist.

15. Verfahren nach Ansprüche 12-13, **dadurch**
**gekennzeichnet, dass** als Transportelement (250) das Transportelement "Single Codec" eingesetzt wird,
dass vorzugsweise als Organisationskennzeichen (258) ein von der ITU-T abweichendes Kennzeichen genutzt wird,
und dass im Transportelement (260) "Codec Information" ein Wert angegeben ist, der einen Standard für die Übertragung von Codierungs-/Decodierungsart gemäß einem Standard für die Übertragung von Faxdaten bezeichnet, wobei der Standard für die Übertragung der Faxdaten vorzugsweise der Standard T.38 oder ein auf diesem Standard aufbauender Standard ist.

16. Verfahren nach Ansprüche 12-13, **dadurch**
**gekennzeichnet, dass** als Transportelement (250) das Transportelement "Single Codec" eingesetzt wird,
dass vorzugsweise als Organisationskennzeichen (258) ein von der ITU-T abweichendes Kennzeichen genutzt wird,
und dass im Transportelement (260) "Codec Information" ein Wert angegeben ist, der einen Standard für die Übertragung von Übertragungsprotokoll gemäß einem Standard für die Übertragung von Faxdaten bezeichnet, wobei der Standard für die Übertragung der Faxdaten vorzugsweise der Standard T.38 oder ein auf diesem Standard aufbauender Standard ist.

17. Verfahren nach einem der Ansprüche 1 bis 10, **dadurch gekennzeichnet, dass** beide Steuereinheiten (52, 54) in einer Vermittlungsstelle (48) angeordnet sind,
und dass zum Übertragen der Signalisierungsdaten ein für die Vermittlungsstelle (48) festgelegtes internes Signalisierungsprotokoll eingesetzt wird.

18. Verfahren nach Anspruch 17, **dadurch gekennzeichnet, dass** beide Steuereinheiten (52, 54) in einer Vermittlungsstelle (48) angeordnet sind,
und dass zumindest ein Teil der Nachrichten des internen Signalisierungsprotokolls für verschiedene Anschlusseinheiten gleich ist.

19. Verfahren nach einem der vorhergehenden Ansprüche, **dadurch gekennzeichnet, dass** die Netzübergangseinheit (28, 42) von einer räumlich entfernten Steuereinheit (52, 54) gesteuert wird, vorzugsweise gemäß einem standardisierten Protokoll oder gemäß einem defactostandardisierten Protokoll, insbesondere gemäß Protokoll MGCP oder gemäß Protokoll H.248 oder gemäß einem auf einem dieser Protokolle aufbauenden Protokoll.

20. Verfahren nach Anspruch 19, **dadurch**
**gekennzeichnet, dass** die Steuereinheit (52, 54) an die Netzübergangseinheit (28, 42) eine Verbindungsaufbaunachricht (102, 108) sendet, in welcher die Anfangscodierungsart angegeben ist, insbesondere die Codierungsart gemäß Standard G.723.1, gemäß Standard G.711 oder gemäß einem auf einem dieser Standards aufbauenden Standard.

21. Verfahren nach Anspruch 20, **dadurch**
**gekennzeichnet, dass** die Verbindungsaufbaunachricht (102, 108) eine Anforderung zum Erfassen und Melden eines Faxtones enthält.

22. Verfahren nach einem der vorhergehenden Ansprüche,
**dadurch gekennzeichnet, dass** nach dem Erfassen des Faxtones eine Steuereinheit (54) an die durch sie gesteuerte Netzübergangseinheit (42) eine Verbindungsmodifizierungsnachricht (212) sendet, in der die Faxdatencodierungsart oder das Faxdatenübertragungsprotokoll angegeben ist, vorzugsweise einen Hinweis auf einen Standard zur Übertragung von Faxdaten, insbesondere auf den Standard T.38 oder einen darauf aufbauenden Standard,
und dass die Netzübergangseinheit (42) beim Bearbeiten der Verbindungsmodifizierungsnachricht (212) die Codierungsart oder das Übertragungsprotokoll ändert.

23. Verfahren nach einem der vorhergehenden Ansprüche,
**dadurch gekennzeichnet, dass** das Paketübertragungsnetz das Internet oder ein anderes gemäß Internetprotokoll arbeitendes Datenübertragungsnetz ist oder dass das Paketübertragungsnetz ein ATM-Netz ist.

## Claims

1. Method for transmitting fax data via a packet transmission network (10),
in which method a transmission path for transmitting user data is established between two fax devices (FA, FB) in a circuit-switched telecommunications network (12),
a section (118, 230) of the transmission path, which section lies between two network gateway units (28, 42), is located in a packet transmission network (10) in which the user data is forwarded as data packets,
the network gateway units (28, 42) are controlled by a control unit (52, 54) in each case,
an initial coding type and an initial transmission protocol which are suitable for the transmission of voice data are initially selected for the user data to be transmitted in the data packets,
after the detection of a fax tone which is typical for fax devices (FA, FB), a fax data coding type and/or a fax transmission protocol is selected for the user data to be transmitted in the data packets,
and in which method, for setting the fax coding type and/or the fax transmission protocol, signalling data travels from one network gateway unit (28, 42), via its control unit (52, 54), via at least one exchange (48, 50) of the circuit-switched network (12) to the other control unit (52, 54) and then to the other network gateway unit (28, 42).

2. Method for transmitting fax data via a packet transmission network (10),
in which method a transmission path for transmitting user data is established between two fax devices (FA, FB) in a circuit-switched telecommunications network (12),
a section (118, 230) of the transmission path, which section lies between two network gateway units (28, 42), is located in a packet transmission network (10) in which the user data is forwarded as data packets,
the network gateway units (28, 42) are controlled by a control unit (52, 54) in each case,
an initial coding type and an initial transmission protocol which are suitable for the transmission of voice data are initially selected for the user data to be transmitted in the data packets,
after the detection of a fax tone which is typical for fax devices (FA, FB), a fax data coding type and/or a fax transmission protocol is selected for the user data to be transmitted in the data packets,
and in which method, for setting the fax coding type and/or the fax transmission protocol, signalling data travels from one network gateway unit (28, 42), via its control unit (52, 54), via at least one exchange (48, 50) of the circuit-switched network (12) to the other control unit (52, 54) and then to the other network gateway unit (28, 42).

3. Method according to claims 1 - 2,
**characterised in that**
the initial coding type results in a compressing or decompressing of the user data at the gateway between the networks (10, 12),

4. Method according to claim 1
**characterised in that**
the fax data coding type does not result in any compressing or decompressing of the user data, or results in a different compressing or decompressing of the user data .

5. Method according to claims 1-2,
**characterised in that**
the initial transmission protocol contains synchronisation data which marks the sampling instants of a voice signal,

6. Method according to claim 2,
**characterised in that**
the fax transmission protocol does not contain any synchronisation data which marks the sampling instants.

7. Method according to claim 3-6,
**characterised in that**
the initial coding type is the coding type specified in the G.723.1 standard or in a standard which is based on this standard,

8. Method according to claim 4 or to claim 3 or 5 if dependent on claim 1,
**characterised in that**
the fax data coding type is a coding type in accordance with the T.38 standard, preferably the coding type specified in the G.711 standard or the coding type specified in a standard which is based on this standard.

9. Method according to claims 3-6,
**characterised in that**
the initial transmission protocol is the RTP protocol or a protocol which is based on this protocol,

10. Method according to claim 6, or to claim 3 or 5, if dependent on claim 2,
**characterised in that**
the fax transmission protocol is the UDP protocol, the TCP protocol or the protocol in accordance with the T.38 standard or in accordance with a standard which is based on this standard.

11. Method according to one of the preceding claims,
**characterised in that**
the signalling data is transmitted between two exchanges (48, 50),
that the signalling data is either transmitted between the exchanges (48, 50) using transport elements (150, 180, 250) and a transport protocol in accordance with the ISUP standard, in particular in accordance with the standard Q.761 to Q.764 or in accordance with a standard which is based on one of these standards,
or that the signalling data is transmitted between the exchanges (48, 50) using transport elements and a transport protocol in accordance with the BICC standard or a standard which is based on this standard.

12. Method according to claim 11,
**characterised in that**
the transport elements (150, 180, 250) and the transport protocol support the Q.763 Add. 1 standard or a standard which is based on one of these standards, in particular the Q.765.5 standard or a standard which is based on this standard.

13. Method according to claim 11,
**characterised in that**
the transport elements (150, 180, 250) and the transport protocol support the Q.765 standard or a standard which is based on one of these standards, in particular the Q.765.5 standard or a standard which is based on this standard.

14. Method according to claims 12-13,
**characterised in that**
the transport element "Single Codec" is used as a transport element (250),
that a different code from that of the ITU-T is preferably used as an organisation code (258),
and that a value is specified in the transport element (260) "Codec Information", which value designates a standard for the transmission of fax data in accordance with a standard for the transmission of fax data, wherein the standard for the transmission of fax data is preferably the T.38 standard or a standard which is based on this standard.

15. Method according to claims 12-13,
**characterised in that**
the transport element "Single Codec" is used as a transport element (250),
that a different code from that of the ITU-T is preferably used as an organisation code (258),
and that a value is specified in the transport element (260) "Codec Information", which value designates a standard for the transmission of fax data and/or the coding/decoding type in accordance with a standard for the transmission of fax data, wherein the standard for the transmission of fax data is preferably the T.38 standard or a standard which is based on this standard

16. Method according to claims 12-13,
**characterised in that**
the transport element "Single Codec" is used as a transport element (250),
that a different code from that of the ITU-T is preferably used as an organisation code (258),
and that a value is specified in the transport element (260) "Codec Information", which value designates a standard for the transmission of the transmission protocol in accordance with a standard for the transmission of fax data, wherein the standard for the transmission of fax data is preferably the T.38 standard or a standard which is based on this standard.

17. Method according to claims 1 - 10,
**characterised in that**
both control units (52,54) are arranged in an exchange (48) and that an internal signalling protocol determined for the exchange (48) is used to transmit the signalling data.

18. Method according to claim 7,
**characterised in that**
both control units (52,54) are arranged in an exchange (48) and that at least one part of the messages of the internal signalling protocol is identical for different connection units.

19. Method according to one of the preceding claims,
**characterised in that**
the network gateway unit (28, 42) is controlled by a spatially remote control unit (52, 54), preferably in accordance with a standardised protocol or in accordance with a de facto standardised protocol, in particular according to protocol MGCP or according to protocol H.248 or according to a protocol which is based on one of these protocols.

20. Method according to claim 19,
**characterised in that**
the control unit (52, 54) sends a connection setup message (102, 108) to the network gateway unit (28, 42), in which message the initial coding type is specified, in particular the coding type in accordance with the G.723.1 standard, in accordance with the G.711 standard, or in accordance with a standard which is based on one of these standards.

21. Method according to claim 20,
**characterised in that**
the connection setup message (102, 108) contains a request for the detection and reporting of a fax tone.

22. Method according to one of the preceding claims,
**characterised in that,**
after the detection of the fax tone, a control unit (54) sends a connection modification message (212) to the network gateway unit (42) which it controls, in which message the fax data coding type or the fax data transmission protocol is specified, preferably a reference to a standard for transmitting fax data, in particular to the T.38 standard or a standard which is based on this standard,
and that when processing the connection modification message (212), the network gateway unit (42) changes the coding type or the transmission protocol.

23. Method according to one of the preceding claims,
**characterised in that**
the packet transmission network is the Internet or another data transmission network which works in accordance with the Internet protocol, or that the packet transmission network is an ATM network.

## Revendications

1. Procédé de transmission de données de télécopieur sur un réseau de transmission par paquets (10), dans lequel est établi, entre deux télécopieurs (FA, FB) d'un réseau de télécommunications (12) à circuit commuté, un chemin de transmission pour transmettre des données utiles, une partie (118, 230) du chemin de transmission située entre deux passerelles (28, 42) se trouve dans un réseau de transmission par paquets (10) dans lequel les données utiles sont réacheminées sous la forme de paquets de données, les passerelles (28, 42) sont respectivement commandées par une unité de commande (52, 54), un type de codage initial et un protocole initial de transmission qui se prêtent à la transmission de données vocales sont choisis, tout d'abord, pour les données utiles à transmettre dans les paquets de données, un type de codage de données de télécopieur est choisi, après la détection d'un son de télécopieur typique pour des télécopieurs (FA, FB), pour les données utiles à transmettre dans les paquets de données et dans lequel, pour régler le type de codage de données de télécopieur, des données de signalisation parviennent, d'une passerelle (28, 42), via l'unité de commande (52, 54) de celle-ci, en passant par au moins un centre de commutation (48, 50) du réseau (12) à circuit commuté, à l'autre unité de commande (52, 54), puis à l'autre passerelle (28, 42).

2. Procédé de transmission de données de télécopieur sur un réseau de transmission par paquets (10), dans lequel est établi, entre deux télécopieurs (FA, FB) d'un réseau de télécommunications (12) à circuit commuté, un chemin de transmission pour transmettre des données utiles, une partie (118, 230) du chemin de transmission située entre deux passerelles (28, 42) se trouve dans un réseau de transmission par paquets (10) dans lequel les données utiles sont réacheminées sous la forme de paquets de données, les passerelles (28, 42) sont respectivement commandées par une unité de commande (52, 54), un type de codage initial et un protocole initial de transmission qui se prêtent à la transmission de données vocales sont choisis, tout d'abord, pour les données utiles à transmettre dans les paquets de données, un protocole de transmission par télécopieur est choisi, après la détection d'un son de télécopieur typique pour des télécopieurs (FA, FB), pour les données utiles à transmettre dans les paquets de données et dans lequel, pour régler le protocole de transmission par télécopieur, des données de signalisation parviennent, d'une passerelle (28, 42), via l'unité de commande (52, 54) de celle-ci, en passant par au moins un centre de commutation (48, 50) du réseau (12) à circuit commuté, à l'autre unité de commande (52, 54), puis à l'autre passerelle (28, 42).

3. Procédé selon les revendications 1-2, **caractérisé en ce que** le type de codage initial provoque une compression ou décompression des données utiles lors du passage entre les réseaux (10, 12).

4. Procédé selon la revendication 1, **caractérisé en ce que** le type de codage de données de télécopieur ne provoque pas de compression ou décompression ou provoque une autre compression ou décompression des données utiles que le type de codage initial.

5. Procédé selon les revendications 1-2, **caractérisé en ce que** le protocole initial de transmission contient des données de synchronisation qui marquent des instants d'échantillonnage d'un signal vocal.

6. Procédé selon la revendication 2, **caractérisé en ce que** le protocole de transmission par télécopieur ne contient pas de données de synchronisation qui marquent des instants d'échantillonnage.

7. Procédé selon l'une quelconque des revendications 3-6, **caractérisé en ce que** le type de codage initial est le type de codage défini dans le standard G.723.1 ou celui défini dans un standard basé sur ce standard.

8. Procédé selon la revendication 4, ou selon la revendication 3 ou 5 si dépendantes de la revendication 1, **caractérisé en ce que** le type de codage de données de télécopieur est un type de codage selon le standard T.38, préférentiellement le type de codage défini dans le standard G.711, ou le type de codage défini dans un standard basé sur l'un de ces standards.

9. Procédé selon les revendications 3-6, **caractérisé en ce que** le protocole initial de transmission est le protocole RTP ou un protocole basé sur ce protocole.

10. Procédé selon la revendication 6 ou selon la revendication 3 ou 5 si dépendantes de la revendication 2, **caractérisé en ce que** le protocole de transmission par télécopieur est le protocole UDP, le protocole TCP ou le protocole selon le standard T.38 ou selon un standard basé sur l'un de ces standards.

11. Procédé selon l'une des revendications précédentes, **caractérisé en ce que** les données de signalisation sont transmises entre deux centres de commutation (48, 50), **en ce que** les données de signalisation sont transmises soit entre les centres de commutation (48, 50) avec des éléments de transport (150, 180, 250) et un protocole de transport selon le standard ISUP, en particulier selon le standard Q.761 à Q.764 ou selon un standard basé sur l'un de ces standards, ou **en ce que** les données de signalisation sont transmises entre les centres de commutation (48, 50) avec des éléments de transport et un protocole de transport selon le standard BICC ou un standard basé sur ce standard.

12. Procédé selon la revendication 11, **caractérisé en ce que** les éléments de transport (150, 180, 250) et le protocole de transport satisfont au standard Q.763 Add. 1 ou à un standard basé sur l'un de ces standards, en particulier au standard Q.765.5 resp. à un standard basé sur ce standard.

13. Procédé selon la revendication 11, **caractérisé en ce que** les éléments de transport (150, 180, 250) et le protocole de transport satisfont au standard Q.765 ou à un standard basé sur l'un de ces standards, en particulier au standard Q.765.5 resp. à un standard basé sur ce standard.

14. Procédé selon les revendications 12-13, **caractérisé en ce qu'**est mis en oeuvre, en tant qu'élément de transport (250), l'élément de transport «Single Codec», **en ce qu'**est utilisé, préférentiellement, en tant qu'identifiant d'organisation (258), un identifiant différant de l'UIT-T et **en ce qu'**est indiquée, dans l'élément de transport (260) «Codec Information», une valeur qui désigne un standard pour la transmission de données de télécopieur selon un standard pour la transmission de données de télécopieur, le standard pour la transmission des données de télécopieur étant préférentiellement le standard T.38 ou un standard basé sur ce standard.

15. Procédé selon les revendications 12-13, **caractérisé en ce qu'**est mis en oeuvre, en tant qu'élément de transport (250), l'élément de transport «Single Codec», **en ce qu'**est utilisé, préférentiellement, en tant qu'identifiant d'organisation (258), un identifiant différant de l'UIT-T et **en ce qu'**est indiquée, dans l'élément de transport (260) «Codec Information», une valeur qui désigne un standard pour la transmission du type de codage / décodage selon un standard pour la transmission de données de télécopieur, le standard pour la transmission des données de télécopieur étant préférentiellement le standard T.38 ou un standard basé sur ce standard.

16. Procédé selon les revendications 12-13, **caractérisé en ce qu'**est mis en oeuvre, en tant qu'élément de transport (250), l'élément de transport «Single Codec», **en ce qu'**est utilisé, préférentiellement, en tant qu'identifiant d'organisation (258), un identifiant différant de l'UIT-T et **en ce qu'**est indiquée, dans l'élément de transport (260) «Codec Information», une valeur qui désigne un standard pour la transmission du protocole de transmission selon un standard pour la transmission de données de télécopieur, le standard pour la transmission des données de télécopieur étant préférentiellement le standard T.38 ou un standard basé sur ce standard.

17. Procédé selon l'une des revendications 1 à 10, **caractérisé en ce que** les deux unités de commande (52, 54) sont situées dans un centre de commutation (48) et **en ce qu'**est mis en oeuvre, pour la transmission des donnés de signalisation, un protocole interne de signalisation défini pour le centre de commutation (48).

18. Procédé selon la revendication 7, **caractérisé en ce que** les deux unités de commande (52, 54) sont situées dans un centre de commutation (48) et **en ce qu'**au moins une partie des messages du protocole interne de signalisation est identique pour différentes unités de raccordement.

19. Procédé selon l'une des revendications précédentes, **caractérisé en ce que** la passerelle (28, 42) est commandée par une unité de commande (52, 54) distante dans l'espace, préférentiellement selon un protocole standardisé ou selon un protocole standardisé de facto, en particulier selon le protocole MGCP ou selon le protocole H.248 ou selon un protocole basé sur l'un de ces protocoles.

20. Procédé selon la revendication 19, **caractérisé en ce que** l'unité de commande (52, 54) envoie à la passerelle (28, 42) un message d'établissement de liaison (102, 108) dans lequel est indiqué le type de codage initial, en particulier le type de codage selon le standard G.723.1, selon le standard G.711 ou selon un standard basé sur l'un de ces standards.

21. Procédé selon la revendication 20, **caractérisé en ce que** le message d'établissement de liaison (102, 108) contient une requête de détection et de signalisation d'un son de télécopieur.

22. Procédé selon l'une des revendications précédentes, **caractérisé en ce que**, après la détection du son de télécopieur, une unité de commande (54) envoie à la passerelle (42) qu'elle commande un message de modification de liaison (212) dans lequel est indiqué le type de codage de données de télécopieur ou le protocole de transmission de données de télécopieur, préférentiellement une référence à un standard de transmission de données de télécopieur, en particulier au standard T.38 ou à un standard basé sur celui-ci, et **en ce que** la passerelle (42) modifie le type de codage ou le protocole de transmission lors du traitement du message de modification de liaison (212).

23. Procédé selon l'une des revendications précédentes, **caractérisé en ce que** le réseau de transmission par paquets est l'internet ou un autre réseau de transmission de données opérant conformément au protocole internet ou **en ce que** le réseau de transmission par paquets est un réseau ATM.
